# EUROPEAN PATENT APPLICATION

(11) **EP 4 378 619 A1**
(43) Date of publication of application: **05.06.2024**
(21) Application number: 22211185.8
(22) Date of filing: 02.12.2022
(51) Int. Cl.: B23K 26/38, B23K 37/053, B23Q 1/76, B23K 101/06

(54) **SUPPORT DEVICE FOR SUPPORTING A TUBE ON A TUBE WORKING MACHINE, SUPPORT SYSTEM COMPRISING SAID SUPPORT DEVICE, AND LASER TUBE WORKING MACHINE COMPRISING SAID SUPPORT SYSTEM**

(71) Applicant: Bystronic Laser AG, 3362 Niederönz (CH)
(72) Inventor: Fontana, Luca, 25035 Ospitaletto BS (IT); Skayky, Hisham, 25133 Brescia BS (IT)
(74) Representative: Perani & Partners S.p.A.

(57) **Abstract**

Support device (1) for supporting a tube (T) on a tube working machine (100). The support device (1) comprise a base unit (2), a pivoting arm (3), an actuation unit (4) connected to the pivoting arm (3) and configured to act on the pivoting arm (3) to rotate the pivoting arm (3) between a working configuration and a rest configuration, guiding elements (5) extending on which the base unit (2) is mounted to slide along the sliding direction (S-S), a driving unit (6) configured to drive the base unit (2) and adjust the angular position of the pivoting arm (3) when the pivoting arm (3) is in the working configuration.

## Description

### Technical field

The present invention relates to the field of equipment and components for supporting a tube on a tube working machine.

In detail, the present invention relates to a support device and a relative supporting system for supporting a tube on a tube working machine, particularly a laser tube cutting machine.

It is also object of the present invention a laser tube working machine which comprises such supporting system.

### State of the art

Laser cutting is a well-known technology that uses a laser beam to vaporize materials, resulting in a cut edge or an engrave.

Such laser cutting technology has been combined with computer numerical control in CNC machines to automate cutting operations of workpieces such as metal sheets or tubes.

Known laser tube working machines comprise a working station where a laser is configured to perform cutting operations on a tube to be worked, a supporting system configured to vertically support the tube, and a moving mandrel configured to grip a tail end of the tube and feed the tube to the working station.

The mandrel is also configured to rotate the tube around its axis to allow the laser to perform cutting along the whole profile of the tube.

In order to perform cutting operations along the whole profile of the tube, the tube axis must be hold at a constant height during tube rotation. For this purpose, laser tube working machines are configured to actively control the supporting system when the mandrel rotates the tube around its axis.

Laser tube working machines are configured to synchronize the supporting system with the rotary axis of the mandrel in the way that, during tube rotation, the supporting system follows the tube profile keeping the tube axis at a constant distance from the ground.

Various active supporting systems for tube working machines are known.

For example, EP3292944B1 discloses a supporting system for a laser tube working machine that comprises a plurality of support devices configured to jointly support a tube to be worked.

Each support device has a pivoting arm hinged on a basement of the tube working machine and a pneumatic cylinder configured to switch the pivoting arm between a working configuration wherein it supports the tube and a rest configuration wherein it is released form the tube.

It is worth noting that the pneumatic cylinders need to be continuously fed with a compressed air flow provided by an air compressor.

The supporting system disclosed in EP3292944B1 comprises also a rack and pinion system that interconnects the support devices to simultaneously adjust their pivoting arm inclination. In use, a drive motor acts on the rack and pinion system to modify the inclination of the pivoting arms achieving the active tube support.

When the rack and pinion system modifies the inclination of the pivoting arms, the pneumatic cylinders of the respective support devices are compressed/extended. Therefore, in order to actively support the tube, the drive motor has to continuously win the resistance of the pneumatic cylinders and the air compressor has to continuously feed a restoring compressed air flow to the pneumatic cylinders.

The resistance of the pneumatic cylinder and the need to continuously provide a restoring compressed air flow causes a significant waste of energy and limits the dynamic behavior of the system.

Moreover, the resistance generated by the pneumatic cylinders induces extra mechanical stresses in the mechanical components of the support system that, therefore, must be oversized. Disadvantageously, this negatively affects the dynamic behavior of the support system increasing the inertia of the moving components.

### Scope of the invention

In this context, the object of the present invention is to provide an energy-efficient support device and supporting system configured to support a tube on a tube working machine.

It is also object of the present invention to provide a support device able to reach high dynamics with less force and mechanical stress on the components.

The specified technical object and the specified aims are substantially achieved by a support device and a supporting system comprising the technical characteristics described in one or more of the appended claims.

### Summary of the invention

The support device for supporting a tube on a tube working machine object of the present invention comprises a base unit, a pivoting arm pivotally attached to the base unit around a rotation axis, and an actuation unit connected to the pivoting arm.

The actuation unit is configured to rotate the pivoting arm around the rotation axis between a working configuration in which the pivoting arm supports the tube and a rest configuration in which the pivoting arm is released form the tube.

The support device comprises also a guiding element extending along a sliding direction on which the base unit is mounted, and a driving unit connected to the base unit. The driving unit is configured to drive the base unit along the guiding elements in the sliding direction and adjust the angular position of the pivoting arm around the arm rotation axis when it is in the working configuration.

In use, the driving unit acts on the base element to swivel the pivoting arms and actively support the tube.

It is worth noting that, to actively support the tube, the driving unit just swivels the pivoting arm acting on the sliding degree of freedom of the base unit without compressing any pneumatic cylinder that needs to be continuously fed with a compressed restoring air flow to return in the extended position.

Therefore, advantageously, the present invention allows not only to save the energy needed in the prior art devices to win the resistance of the pneumatic cylinder, but it also avoids to continuously waste energy to generate the restoring compressed air flow.

Moreover, advantageously, the present invention allows to reach higher dynamics with less force and less stress on the components since no resisting force generated by the pneumatic cylinder must be won to actively support the tube.

According to one embodiment, the driving unit is configured to drive the base unit to slide along the sliding direction with respect to the actuation unit. The relative movement of the base unit with respect to the actuation unit allows to accurately swivel the pivoting arm when it is in the working configuration.

According to one embodiment, the actuation unit has a mounting portion configured to be mounted fixedly along the sliding direction with respect to the guiding elements. The mounting portion mounted fixedly along the sliding direction with respect to the guiding elements increases the stability and reliability of the support device.

According to one embodiment, the mounting portion is configured to rotate around a mounting rotation axis when the pivoting arm is in the working configuration. The rotation of the mounting portion around the mounting rotation axis improves the dynamic behavior of the support device, in particular it allows the angular position of the pivoting arm to be rapidly changed.

According to one embodiment, the mounting rotation axis is parallel to the arm rotation axis.

According to one embodiment, the pivoting arm has a connecting portion arranged between the first and second portions, and the actuation unit has a connecting end connected at the connecting portion of the pivoting arm. The connection of the actuation unit between the first and second portions of the pivoting arm improves the compactness in the height direction of the support device when it is not used to support the tube (i.e. when the pivoting arm is in the rest configuration) and guarantees an appropriate stroke of the first portion of the pivoting arm along the height direction when the support device supports the tube (i.e. when the pivoting arm is in the working configuration).

According to one embodiment, the connecting end is hinged to the pivoting arm at a fixed distance between the first portion and the second portion.

According to one embodiment, the connecting end is configured to rotate with respect to the pivoting arm around a connecting rotation axis which is oriented parallel to the arm rotation axis.

According to one embodiment, the actuation unit comprises an actuation member movable relative to the mounting portion between an extended configuration and a retracted configuration. When the actuation member is in the extended and retracted configurations defines respectively the working and the rest configurations of the pivoting arm. The relative movement of the actuation member with respect to the mounting portion between the extended and retracted configurations allows to rapidly switch the pivoting arm between the working and rest configuration, preferably employing hydraulic actuators, without the need to introduce specific sensors.

According to one embodiment, the base unit comprises a first carriage and a second carriage mounted on the guiding elements and mutually slidable along the sliding direction. The second portion of the pivoting arm is pivotally attached to the first carriage of the base unit around the arm rotation axis; the driving unit is connected to the second carriage to drive the second carriage along the sliding direction. The first and second carriages allow to increase the compactness in the height direction of the support device when it is not used to support the tube and to simplify the synchronization of two or more support devices of a supporting system.

According to one embodiment, the base unit comprises locking members configured to lock and unlock mutual sliding of the first carriage and the second carriage along the sliding direction. The locking members are switchable between a locking configuration in which the first and second carriages are mutually locked along the sliding direction, and an unlocking configuration in which the first and second carriages are freely mutually movable along the sliding direction.

Advantageously, the first and second carriages and the locking members allow to prevent or significantly limit the rotation of the pivoting arm when the pivoting arm is in the rest configuration, reducing components wear and increasing the compactness in a heigh direction of the support device when it is not used to support the tube. The first and second carriages and the locking members allow to decouple the working and rest configurations of two or more support devices of a supporting system.

According to one embodiment, the locking members comprise a connecting element connected to the first and second carriages, and a locking element acting on the connecting element to adjust and lock the mutual distance between the first and second carriages along the sliding direction when the locking members switch from the unlocking to the locking configuration.

According to one embodiment, the sliding direction is perpendicular to the arm rotation axis.

The present invention further relates to a supporting system for a tube working machine. The tube working machine comprises two or more of said support devices arranged along the sliding direction, and a synchronizing unit connected to the driving units of each support device to synchronize the sliding of the base elements on the guiding elements along the sliding direction.

According to one embodiment, the synchronizing unit comprises a synchronization element and a drive motor. The synchronization element extends parallel to the sliding direction and connects the driving units of each support device, the drive motor is configured to drive the synchronization element along a driving direction with respect to the guiding elements of the support devices. Synchronization element and the drive motor allow to realize an economic and easily scalable supporting system.

According to one embodiment, the drive motor is a single drive motor. Advantageously, the single drive motor allows to save energy and resources.

The present invention further relates to a laser tube working machine. The laser tube working machine comprises said supporting system, and a laser working station having a laser working head configured to cut or engrave the tube supported by the supporting system, and a tube carrying carriage configured to feed the tube to the laser working station along a longitudinal direction.

### BRIEF DESCRIPTION OF THE DRAWINGS

Further characteristics and advantages of the present invention will appear more clearly from the indicative, and therefore non-limiting, description of a preferred but not exclusive embodiment of the support device, the supporting system and the laser tube working machine as illustrated in the enclosed drawings in which:
- Figure 1 shows a side view of a support device according to one embodiment of the present invention with a component (pivoting arm) in a working configuration;
- Figure 2 shows a side view of the support device of Figure 1 with the pivoting arm in a rest configuration;
- Figure 3 shows a perspective view of the support device of Figure 1 with the pivoting arm in the working configuration;

- Figure 4 shows a kinematic scheme of a first embodiment the support device of Figure 1;
- Figure 5a shows a kinematic scheme of a second embodiment the support device of Figure 1 with the pivoting arm in the working configuration and with some components (locking members) in a locking configuration;
- Figure 5b shows a kinematic scheme of a second embodiment of the support device of Figure 1 in the rest configuration with the locking members in an unlocking configuration;
- Figure 6 shows a perspective view of a supporting system according to the present invention;
- Figure 7a shows a perspective view of a laser tube working machine according to one embodiment of the present invention;
- Figure 7b shows a side view of the laser tube working machine of Figure 7a with some components removed.

### DETAILED DESCRIPTION

The present invention relates to a support device 1 for supporting a tube T on a tube working machine 100, in particular on a laser tube cutting machine.

In the context of the present invention the term "tube" is used to indicate an elongated structure extending along a tube axis X-X between opposite ends. It is worth specifying that the term "tube" is not limited to pipes - i.e. rounded tube - but it also refers to any elongated structure with, for example, rectangular, squared or oval hollow cross section as well as to profiles with opened cross sections like C-, U-, V-, X-, T, H- or cross-shaped profiles.

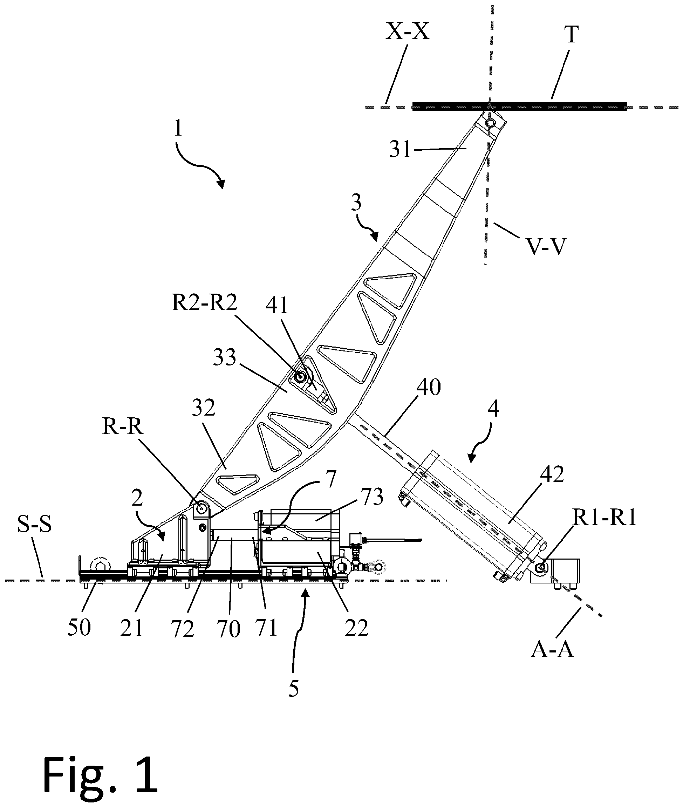

Referring to figure 1-3, the support device 1 comprises a base unit 2 and a pivoting arm 3 pivotally attached to the base unit 2 around an arm rotation axis R-R.

According to one embodiment, the pivoting arm 3 has a first portion 31 configured to support the tube T and a second portion 32 pivotally attached to the base unit 2 around the arm rotation axis R-R.

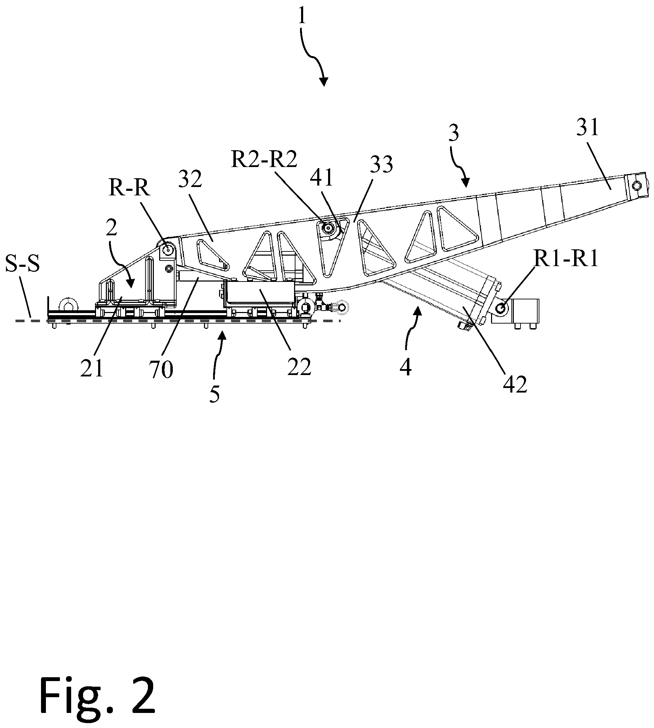

The pivoting arm 3 is movable, by rotation around the arm rotation axis R-R with respect to the base unit 2, between a working configuration in which the first portion 31 is positioned to support the tube T, and a rest configuration wherein the first portion 31 is released from the tube T. The working and rest configuration are shown in Figure 1 and 2, respectively.

In the working configuration the first portion 31 of the pivoting arm 3 is in contact with the tube T to support it, i.e. to support at least part of the tube weight. In the rest configuration the first portion 31 of the pivoting arm 3 is released from the tube T. In the rest configuration, therefore, the first portion 31 of the pivoting arm 3 does not support the tube T.

As the pivoting arm 3 rotates around the arm rotation axis R-R, the height of the first portion 31 along a height direction V-V varies. In detail, in the working configuration, the first portion of the pivoting arm 31 is at a greater distance from the base unit 2 along the height direction V-V than in the rest configuration.

Preferably, the pivoting arm 3 is hinged to the base unit 2 around the arm rotation axis R-R at the second portion 32.

Preferably, the pivoting arm 3 mainly extends along an arm direction P-P between the first and second portions 31, 32 that, therefore, are end portions of the pivoting arm 3.

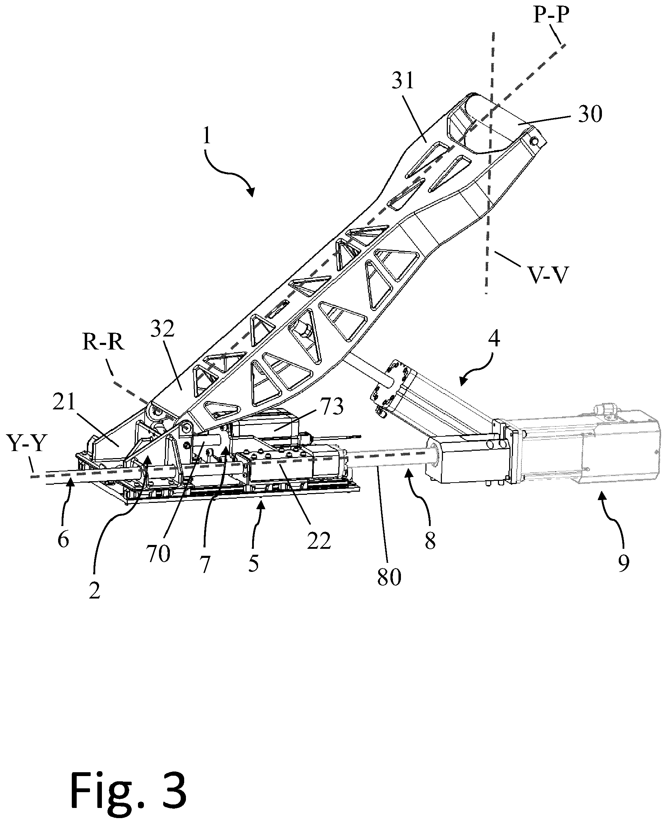

Referring to figure 3, the arm direction P-P is transversal, in particular orthogonal, to the arm rotation axis R-R. As the pivoting arm 3 rotates around the arm rotation axis R-R, the orientation of the arm direction P-P modifies, lifting/lowering the first portion 31 with respect to the base unit 2 along the height direction V-V.

Preferably, the first portion 31 of the pivoting arm 3 comprises a roller 30 configured to support the tube T when the pivoting arm 3 is in the working configuration. The roller 30 is pivotally connected to the first portion 31 in order to support the tube T against gravity along the height direction V-V and to allow the tube T sliding with respect to the support device 1 along the tube axis X-X.

The support device 1 comprises also an actuation unit 4 connected to the pivoting arm 3 and configured to rotate the pivoting arm 3 between the working and rest configuration.

Preferably, the actuation unit 4 has a connecting end 41 connected to the pivoting arm 3 at a connecting portion 33. The connecting portion 33 is arranged between the first and second portions 31, 32, preferably along the arm direction P-P.

Referring to figures 1 and 2, the connecting end 41 is hinged to the pivoting arm 3 at a fixed distance between the first and second portions 31, 32 around a connecting rotation axis R2-R2. This means that the connecting end 41 cannot slide along the arm direction P-P from/towards the first and second portions 31, 32.

According to one embodiment, the connecting end 41 is configured to rotate with respect to the pivoting arm 3 around the connecting rotation axis R2-R2 as the pivoting arm 3 rotates around the arm rotation axis R-R.

Preferably, the connecting rotation axis R2-R2 is parallel to the arm rotation axis R-R.

According to an embodiment shown in figures 1 to 3, the actuation unit 4 has a mounting portion 42 configured to be mounted fixedly with respect to the ground; preferably, the mounting portion 42 is configured to be attached to a basement 101 of the tube working machine 100.

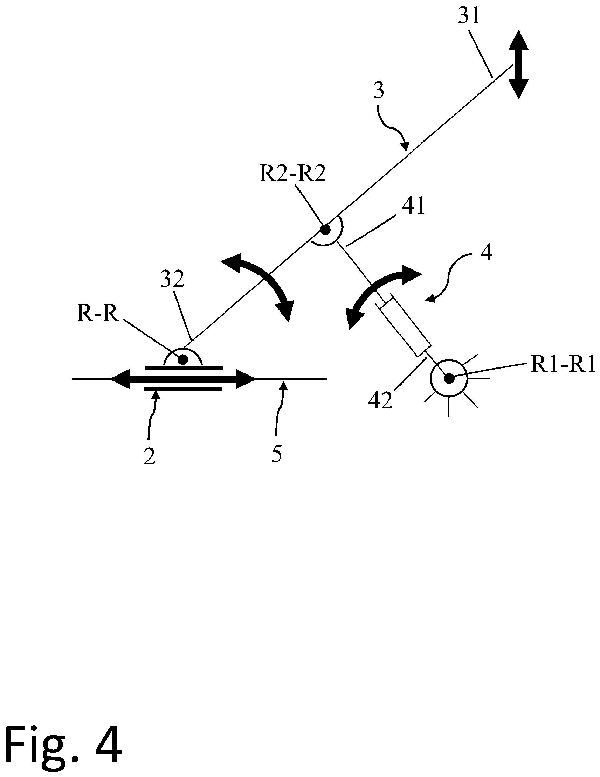

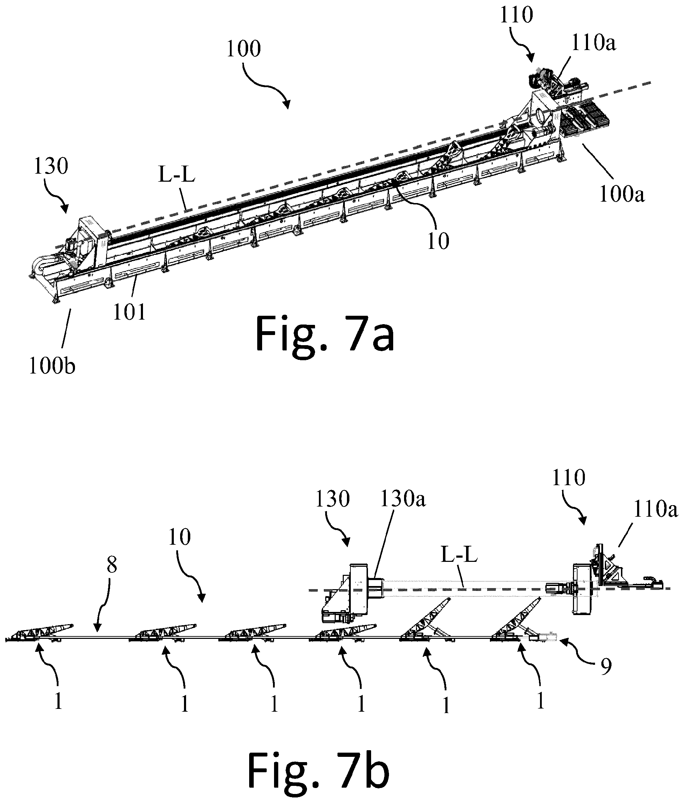

Referring to figure 4, the mounting portion 42 of the actuation unit 4 is configured to be hinged around a fix mounting rotation axis R1-R1. Preferably, the mounting portion 42 is hinged to the basement 101 of the tube working machine 100 around the mounting rotation axis R1-R1 as can be seen in Fig. 7a.

The mounting portion 42 rotates around the mounting rotation axis R1-R1 as the pivoting arm 3 rotates around the arm rotation axis R-R and the connecting end 41 rotates around the connecting rotation axis R2-R2.

According to one embodiment, the mounting rotation axis R1-R1 is parallel to the arm rotation axis R-R.

Referring to figure 1, the actuation unit 4 has an actuation member 40 comprising the connecting portion 41 and slidably connected to the mounting portion 42 along an actuation direction A-A.

As the actuation member 40 moves along the actuation direction A-A relative to the mounting portion 42, the actuation member 40 switches between an extended configuration (figure 1) in which it defines the working configuration of the pivoting arm 3 and a retracted configuration (figure 2) in which it defines the rest configuration of the pivoting arm 3. Therefore, as the actuation member 40 moves between the extended and retracted configuration with respect to the mounting portion 42, the pivoting arm 3 shifts between the working (Fig. 1) and rest configuration (Fig. 2).

In a preferred embodiment, the actuation unit 4 has a hydraulic or pneumatic cylinder comprising the connecting portion 41, the mounting portion 42, and the actuation member 40.

The support device 1 also comprises guiding elements 5 extending along a sliding direction S-S. The base unit 2 is mounted on the guiding elements 5 to slide along the sliding direction S-S, preferably oriented perpendicular to the arm rotation axis R-R.

Preferably, the guiding elements 5 comprise a rail 50 on which the base unit 2 slides like a "carriage".

As schematically represented in figure 4, the sliding of the base unit 2 along the sliding direction S-S, when the pivoting arm 3 is in the working configuration, lifts/lowers the first portion 31 with respect to the base unit 2 along the height direction V-V. In detail, the sliding of the base unit 2 adjusts the angular position of the pivoting arm 3 varying the height of the first portion 31 along the height direction V-V.

Preferably, the guiding elements 5 are attached to the basement 101 of the tube working machine 100 and the mounting portion 42 is configured to be mounted fixedly along the sliding direction S-S with respect the guiding elements 5. In other words, the relative position of connecting rotation axis R2-R2 and the guiding elements 5 is fixed along the sliding direction S-S.

According to one embodiment, as the base unit 2 slides on the guiding elements 5, the base unit 2 moves from/towards the connecting rotation axis R1-R1 along the sliding direction S-S.

Referring to figure 3, the support device 1 comprises also a driving unit 6 connected to the base unit 2.

The driving unit 6 is configured to drive the base unit 2 to let the base unit 2 slide along the sliding direction S-S and adjust the angular position of the pivoting arm 3 around the arm rotation R-R when the pivoting arm 3 is in the working configuration.

Therefore, in use, the driving unit 6 swivels the pivoting arm 3 acting on the base unit 2 along the guiding elements 5 for actively support the tube T on the tube working machine 100, i.e. to keep the first portion 31 of the pivoting arm 3 is in contact with the tube or profile T which is especially of importance in case the tube or profile is not annular in cross-section.

Preferably, as shown in the kinematic scheme of figure 4, the driving unit 6 is configured to drive the base unit 2 to slide along the sliding direction S-S with respect to the actuation unit 4.

In particular, the driving unit 6 is configured to drive the base unit 2 to slide along the sliding direction S-S from/towards the mounting rotation axis R1-R1.

When the pivoting arm 3 is in the working configuration and the driving unit 6 drives the base unit 2 along the sliding direction S-S, the mounting portion 42 rotates around the rotation axis R1-R1 and the pivoting arm 3 rotates around the arm rotation axis R-R. Therefore, the base unit 2, the pivoting arm 3 and the actuation unit 4 are kinematically linked and driven by the driving unit 6.

In particular, as the mounting portion 42 rotates around the rotation axis R1-R1, the actuation member 40 is kept fixed with respect to the mounting portion 42 in the extended configuration.

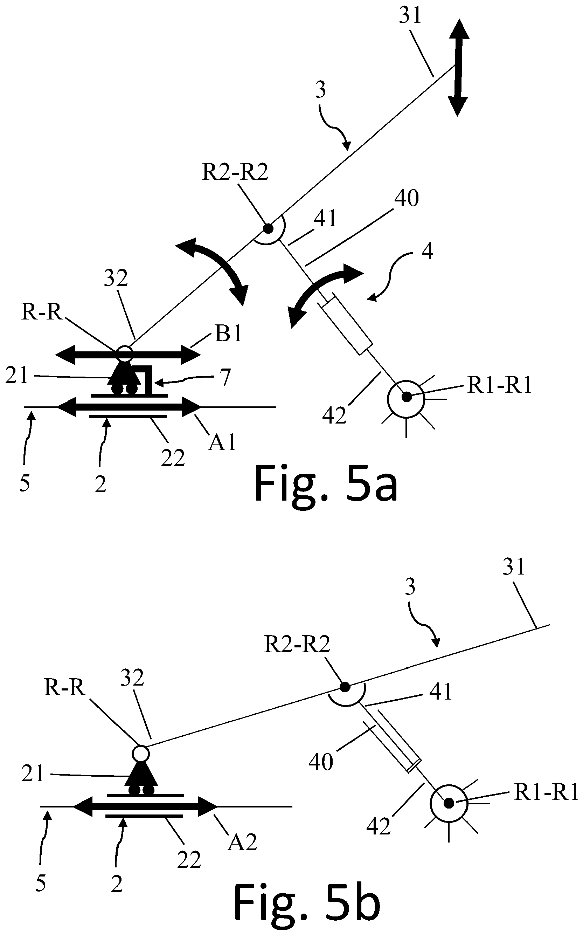

In a preferred embodiment schematically represented in figures 5a and 5b, the base unit 2 comprises a first carriage 21 and a second carriage 22 both mounted on the guiding elements 5 and mutually slidable along the sliding direction S-S. Therefore, the first and second carriage 21, 22 can be independently moved on the guiding elements 5 mutually approaching or moving away each other.

Referring to figures 1 and 2, the second portion 32 of the pivoting arm 3 is pivotally attached to the first carriage 21 around the arm rotation axis R-R, while the driving unit 6 is connected to the second carriage 22 to drive the second carriage 22 along the sliding direction S-S.

Preferably, the base unit 2 comprises locking members 7 configured to lock and unlock mutual sliding of the first and second carriages 21, 22 along the sliding direction S-S.

According to one embodiment, the locking members 7 are configured to be switched between a locking configuration (figure 5a) in which the first and second carriages 21, 22 are mutually locked along the sliding direction S-S, and an unlocking configuration (figure 5b) wherein the first and second carriages 21, 22 are freely mutually movable along the sliding direction S-S.

Referring to figure 5a, when the locking members 7 are in the locking configuration, the first and second carriages 21, 22 jointly move along the sliding direction S-S as a single unit. Therefore, the locking members 7 in the locking configuration prevent mutual movement of the first and second carriages 21, 22 along the sliding direction S-S. This is graphically represented in figure 5a by movement arrows A1, B1 having the same length.

Referring to figure 5b, when the locking members 7 are in the unlocking configuration, the first and second carriages 21, 22 are independently movable along the sliding direction S-S. Therefore, when the locking members 7 are in the unlocking configuration, a movement of the second carriage 22 does not cause a movement of the first carriage 21, and vice versa. This is graphically represented in figure 5b where a movement of the second carriage 22 (indicated by arrow A2) does not generate a movement of the first carriage 21 that stands still.

Preferably, in the locking configuration, the locking members 7 transfer the action of the driving unit 6 on the second carriage 22 to the first carriage 21, i.e. when the driving unit 6 drives the second carriage 22 along the sliding direction S-S the locking members 7 constrain the first carriage 21 to move jointly with the second carriage 22. By this way, the movement of the first carriage 21 swivels the pivoting arm 3 as described above (figure 5a).

When the locking members 7 are in the unlocking configuration, the action of the driving unit 6 on the second carriage 22 is not transferred to the first carriage 21. Therefore, the movement of the second carriage 22 does not determine a swivel of the pivoting arm as the first carriage 21 stands still (figure 5b).

The locking configuration of the locking members 7 is associated with the working configuration of the pivoting arm 3 as shown in figure 5a. In particular, when the locking members 7 are in the locking configuration and the pivoting arm 3 is in the working configuration, the tube T is actively supported, thereby converting the sliding of the first and second carriages 21, 22 in a rotation of the pivoting arm 3 around the arm rotation axis R-R that results in a movement of the first portion 31 along the heigh direction V-V.

On the other side, the unlocking configuration of the locking members 7 is associated with the rest configuration of the pivoting arm 3 as shown in figure 5b. This allows to prevent (or significantly limit) the rotation of the pivoting arm 3 when the pivoting arm 3 is in the rest configuration, reducing components wear and increasing the compactness in the heigh direction V-V of the support device 1 when it is not used to support the tube T. Increasing the compactness of the support device 1 when the pivoting arm 3 is in the rest configuration allows to decrease the size and cost of the tube working machine 100, in particular allows lower size along the heigh direction V-V below a tube-carrying carriage 13 (described below).

Referring to figures 1 and 2, preferably, the locking members 7 comprise a connecting element 70 connected to the first carriage 21 and the second carriage 22.

Moreover, preferably, the locking members 7 comprise a looking element 73 acting on the connecting element 70 to adjust and lock the mutual distance between the first and second carriages 21, 22 along the sliding direction S-S when the locking members 7 switch from the unlocking to the locking configuration.

In the embodiment of figures 1 and 3, the connecting element 70 is a rod 70a constrained on opposite sides to the first and second carriages 21, 22.

Preferably, the rod 70a is fixedly attached to the first carriage 21 and slidably coupled to the second carriage 22 along the sliding direction S-S.

According to one embodiment, the locking element 73 is configured to act on a portion of the rod 70a that is slidably connected to the second carriage 22 - for example, pneumatically or hydraulically - to adjust and lock the mutual distance between the first and second carriages 21, 22 along the sliding direction S-S.

It is also an object of the present invention to provide a supporting system 10 for supporting the tube T on the tube working machine 100, in particular on a laser tube cutting machine.

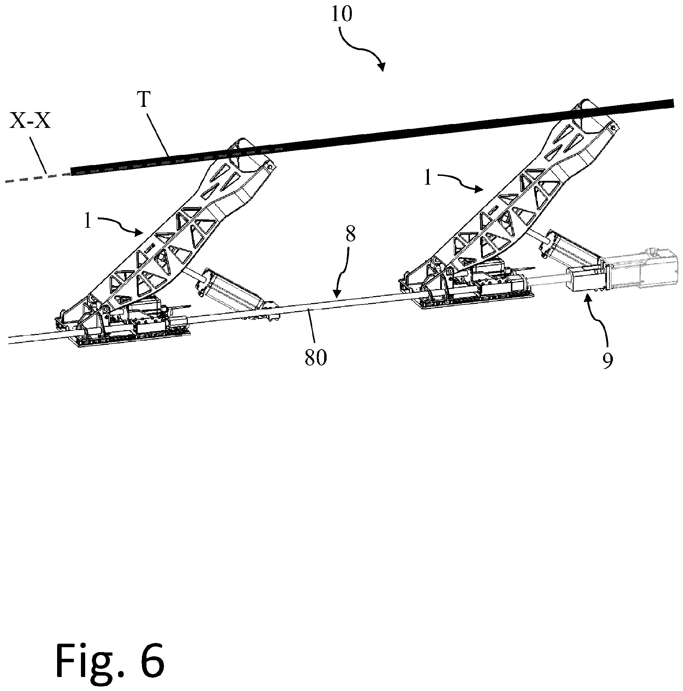

Referring to figure 6, the supporting system 10 comprises two or more of the above-described support devices 1 arranged along the sliding direction S-S to individually or jointly support the tube T along the tube axis X-X.

The supporting system 10 comprises a synchronizing unit 8 connected to the driving units 6 of each support device 1 and configured to synchronize the sliding of the base units 2 of the support devices 1 on the guiding elements 5 along the sliding direction S-S.

Preferably, the synchronizing unit 8 comprises a synchronization element 80 extending parallel to the sliding direction S-S and connecting the driving units 6 of each support device 1.

Preferably, the synchronization element 80 is configured to simultaneously move the base units 2 of the support devices 1 along the sliding direction S-S. The movement of the synchronization element 80 causes simultaneous sliding of the base units 2 of the support devices 1 along the sliding direction S-S.

The synchronization element 80 allows to simultaneously rotate the pivoting arms 3 of the support devices 1 around their respective arm rotation axis R-R modifying the position of the first portion 31 of the pivoting arm 3 along the height direction V-V.

In the embodiment of figure 6, the synchronization element 80 comprises a synchronization rod 80a connected to the base units 2, in particular to the second carriages 22 of the support devices 1.

According to one embodiment, the synchronization rod 80a is configured to connect the base units 6 of the support devices 1 preventing their mutual movement along the sliding direction S-S.

In alternative embodiments not shown in the attached figures, the connecting rod 80a comprises two or more segments connected on opposite sides to the base units 2 of distinct the support devices 1.

The synchronizing unit 8 comprises also a drive motor 9 configured to drive the synchronization element 80 along a driving direction Y-Y with respect to the guiding elements 5 of the support devices 1.

Preferably, the drive motor 9 is configured to displace the synchronization element 80 along the driving direction Y-Y to determine simultaneous sliding of the base units 2 of the support devices 1 and, therefore, simultaneous rotation the respective pivoting arms 2 around their arm rotation axis R-R.

The drive motor 9 can be an electric drive motor, a pneumatic or hydraulic drive motor.

It is also object of the present invention a laser tube working machine 100, in particular a laser tube cutting machine, comprising the supporting system 10.

The working machine 100 comprises a basement 101 configured to lay on a ground surface (not shown) and extending along a longitudinal direction L-L between a first and second end regions 100a, 100b.

The supporting system 10 is configured to be attached to the basement 101 extending along the longitudinal direction L-L, preferably with the sliding direction parallel to the longitudinal direction L-L.

According to one embodiment, the supporting system 10 is configured to support the tube T arranging the tube T with the tube axis X-X extending along, preferably parallel to, the longitudinal direction L-L.

Moreover, it is important to highlight that the supporting system 10 holds the tube T along the direction of height V-V against force of gravity.

The laser tube working machine 100 comprises a laser working station 110 having a laser working head 110a configured to cut or engrave the tube T supported by the supporting system 10.

Preferably, the working station 110 is connected to the basement 101 at the first end region 100a of the laser tube working machine 100.

The laser tube working machine 100 also comprises a tube-carrying carriage 130 movably mounted on the basement 101 along the longitudinal direction L-L to move the supporting system 10 along the height direction V-V between the first and second end regions 100a, 100b.

The pivoting arms 3 of the support devices 1 of the supporting system 10 switch from the working configuration to the rest configuration to let the tube-carrying carriage 130 passing above them along the height direction V-V. In other words, in use, the pivoting arms 3 of the support devices 1 are sequentially switched in the rest configuration as the tube-carrying carriage 130 moves from the second end region 100b to the first end region 100a, therefore, towards the working station 110.

The tube-carrying carriage 130 is configured to grip a tube T tail while the tube T is supported by at least a part of the support devices 1 of the supporting system 10.

The tube-carrying carriage 130 moving from the second end region 100b to the first end region 100a along the longitudinal L-L direction - i.e., towards the working station 110 - is configured to feed the tube T to the working station 110.

The tube-carrying carriage 130 comprises a rotating mandrel 130a configured to rotate the tube T around the tube axis X-X and allow the working head 110a to cut or engrave the tube T around its surface.

The laser tube working machine 100 comprises also a controlling unit (not shown) configured to synchronize the rotation of the rotating mandrel 130a with the synchronizing unit 8 of the supporting system 10 such that during tube T rotation around the tube axis X-X, the support devices 1 follow the tube T profile keeping the tube T axis X-X at a constant height, i.e. at a fix distance from the ground surface.

In one embodiment, the laser tube working machine 100 comprises sensors (not shown) connected to the controlling unit and configured to check the pivoting arm 3 or the actuation member 40 configuration.

Those skilled in the art will obviously appreciate that several changes and variants may be made to the arrangements as described hereinbefore to meet incidental and specific needs. All these variants and changes fall within scope of the invention, as defined in the following claims.

## Claims

1. Support device (1) for supporting a tube (T) on a tube working machine (100), the support device comprising:
- a base unit (2),
- a pivoting arm (3) having a first portion (31) configured to support the tube (T) and a second portion (32) pivotally attached to the base unit (2) around an arm rotation axis (R-R), the pivoting arm (3) being configured to rotate around the arm rotation axis (R-R) between a working configuration, in which the first portion (31) is positioned to support the tube (T), and a rest configuration, in which the first portion (31) is released from the tube (T),
- an actuation unit (4) connected to the pivoting arm (3) and configured to act on the pivoting arm (3) to rotate the pivoting arm (3) between the working configuration and the rest configuration,
**characterized in that it comprises:**
- guiding elements (5) extending along a sliding direction (S-S), the base unit (2) being mounted on the guiding elements (5) to slide along the sliding direction (S-S),
- a driving unit (6) connected to the base unit (2), the driving unit (6) being configured to drive the base unit (2) to let the base unit (2) slide along the sliding direction (S-S) and adjust the angular position of the pivoting arm (3) around the arm rotation axis (R-R) when the pivoting arm (3) is in the working configuration.

2. Support device (1) according to claim 1, wherein the driving unit (6) is configured to drive the base unit (2) to slide along the sliding direction (S-S) with respect to the actuation unit (4).

3. Support device (1) according to claim 1 or 2, wherein the actuation unit (4) has a mounting portion (42) configured to be mounted fixedly along the sliding direction (S-S) with respect to the guiding elements (5).

4. Support device (1) according to claim 3, wherein the mounting portion (42) is configured to rotate around a mounting rotation axis (R1-R1) when the pivoting arm (3) is in the working configuration.

5. Support device (1) according claim 4, wherein the mounting rotation axis (R1-R1) is parallel to the arm rotation axis (R-R).

6. Support device (1) according to any claims 1 to 5, wherein:
- the pivoting arm (3) has a connecting portion (33) arranged between the first portion (31) and the second portion (32),
- the actuation unit (4) has a connecting end (41) connected at the connecting portion (33) of the pivoting arm (3).

7. Support device (1) according to claim 6, wherein the connecting end (41) is hinged to the pivoting arm (3) at a fixed distance between the first portion (31) and the second portion (32).

8. Support device (1) according to claim 6 or 7, wherein the connecting end (41) is configured to rotate with respect to the pivoting arm (3) around a connecting rotation axis (R2-R2), the connecting rotation axis (R2-R2) being parallel to the arm rotation axis (R-R).

9. Support device (1) according to any claims 3 to 8, wherein the actuation unit (4) comprises an actuation member (40) movable relative to the mounting portion (42) between an extended configuration and a retracted configuration, the actuation member (40) in the extended and retracted configuration defining respectively the working and the rest configuration of the pivoting arm (3).

10. Support device (1) according to any claims 1 to 9, wherein:
- the base unit (2) comprises a first carriage (21) and a second carriage (22), the first carriage (21) and the second carriage (22) being mounted on the guiding elements (5) and being mutually slidable along the sliding direction (S-S),
- the second portion (32) of the pivoting arm (3) is pivotally attached to the first carriage (21) of the of the base unit (2) around the arm rotation axis (R-R),
- the driving unit (6) is connected to the second carriage (22) to drive the second carriage (22) along the sliding direction (S-S).

11. Support device (1) according to claim 10, wherein the base unit (2) comprises locking members (7) configured to lock and unlock mutual sliding of the first carriage (21) and the second carriage (22), the locking members (7) being switchable between a locking configuration in which the first carriage (21) and the second carriage (22) are mutually locked along the sliding direction (S-S), and an unlocking configuration in which the first carriage (21) and the second carriage ( 22) are freely mutually movable along the sliding direction (S-S).

12. Support device (1) according to claim 10 or 11, wherein the locking members (7) comprise:
- a connecting element (70) connected to the first carriage (21) and the second carriage (22),
- a locking element (73) acting on the connecting element (70) to adjust and lock the mutual distance between the first carriage (21) and the second carriage (22) along the sliding direction (S-S) when the locking members (7) switch from the unlocking to the locking configuration.

13. Support device (1) according to any claims 1 to 12, wherein the sliding direction (S-S) is perpendicular to the arm rotation axis (R-R).

14. Supporting system (10) for a tube working machine (100), comprising:
- two or more support devices (1) according to any of the preceding claims, the support devices (1) being arranged along the sliding direction (S-S),
- a synchronizing unit (8) connected to the driving units (6) of each support device (1) to synchronize the sliding of the base elements (2) on the guiding elements (5) along the sliding direction (S-S).

15. Supporting system (10) according to claim 14, wherein the synchronizing unit (8) comprises:
- a synchronization element (80) extending parallel to the sliding direction (S-S) and connecting the driving units (6) of each support device (1), and
- a drive motor (9) configured to drive the synchronization element (80) along a driving direction (Y-Y) with respect to the guiding elements (5) of the support devices (1).

16. Laser tube working machine (100) comprising:
- the supporting system (10) according to claim 14 or 15,
- a laser working station (110) comprising a laser working head (110a) configured to cut or engrave the tube (T) supported by the supporting system (10),
- tube-carrying carriage (130) configured to feed the tube (T) to the laser working station (110) along a longitudinal direction (L-L).
